# EUROPÄISCHE PATENTSCHRIFT

(11) **EP 2 736 979 B1**
(45) Veröffentlichungstag und Bekanntmachung des Hinweises auf die Patenterteilung: **27.04.2016**
(21) Anmeldenummer: 11740626.4
(22) Anmeldetag: 27.07.2011
(51) Int. Cl.: C04B 30/02, C07F 7/02, C04B 41/00, C04B 41/49, C04B 41/64, C04B 111/28, C09C 1/30

(54) **VERFAHREN ZUR HERSTELLUNG HYDROPHOBER, WÄRMEDÄMMENDER FORMKÖRPER**
METHOD FOR PRODUCING HYDROPHOBIC, HEAT-INSULATING MOULDINGS
PROCÉDÉ POUR PRODUIRE DES CORPS MOULÉS HYDROPHOBLES THERMO-ISOLANTS

(43) Veröffentlichungstag der Anmeldung: 04.06.2014
(73) Patentinhaber: Evonik Degussa GmbH, 45128 Essen (DE)
(72) Erfinder: KRATEL, Günter, 87471 Durach (DE); BORCHERT, Gerd, 87471 Durach (DE); MENZEL, Frank, 63456 Hanau (DE)
(86) Internationale Anmeldenummer: PCT/EP2011/062932
(87) Internationale Veröffentlichungsnummer: WO 2013/013714

(56) Entgegenhaltungen:
- DE-A1-102007 042 000
- GB-A- 2 376 942
- JP-A- 2003 012 380
- DATABASE WPI Week 199443 Thomson Scientific, London, GB; AN 1994-346979 XP002673356, & JP 6 271371 A (NICHIAS CORP) 27. September 1994 (1994-09-27)

## Beschreibung

Die Erfindung betrifft ein Verfahren zur Herstellung hydrophober, wärmedämmender Formkörper unter definierten Druckbedingungen.

Aus DE-A-3037409 ist bekannt Wärmedämm-Materialien aus geschäumten Perliten mit Stearaten, Silikonaten, Wachsen und Fetten wasserabstoßend zu gestalten. Dies ist auf eine Oberflächenbelegung mit diesen Stoffen zurückzuführen. Die so behandelten Wärmedämm-Materialien sind zwar für flüssiges Wasser abstoßend, absorbieren aber Wasserdampf, in Form von Luftfeuchtigkeit. Dies führt zu einer Verschlechterung der Dämmeigenschaften. Aus DE-A-4221716 ist bekannt, pyrogene Kieselsäure mit Organosilanen umzusetzen und dadurch Wasser abweisend zu machen. Derartige hydrophobe Kieselsäure lässt sich aber nicht ausreichend verdichten und ist nicht verpressbar. Ebenfalls führt eine Verpressung einer mit hydrophober Kieselsäure versehenen Mischung nicht zu akzeptablen Ergebnissen.

In EP-A-1988228 wird ein Verfahren zur Verpressung zu hydrophoben, mikroporösen Wärmedämm-Formkörpern durch Zugabe von Organosilanen während eines Mischprozesses beschrieben. Als nachteilig an diesem Verfahren kann angesehen werden, dass eine Verpressung zu stabilen Platten nur sehr schwer möglich ist, insbesondere wenn bei der Hydrophobierung gasförmige Produkte entstehen.

In JP2003012380 A wird ein Verfahren zur Hydrophobierung von porösem Giesbeton mit einem Organosilan/ Wasserdampfgemisch in einem Reaktor beschrieben.

Es bestand daher die technische Aufgabe ein Verfahren bereitzustellen, welches die Nachteile, die bei der Hydrophobierung von Wärmedämmstoffen auftreten, minimiert und zudem einfach und wirtschaftlich durchzuführen ist.

Gegenstand der Erfindung ist ein Verfahren zur Hydrophobierung eines mikroporösen, hydrophile Kieselsäure aufweisenden Wärmedämm-Formkörpers, bei dem dieser mit wenigstens einem Organosilan behandelt wird, wobei man in eine Kammer, die den mikroporösen, hydrophile Kieselsäure aufweisenden Wärmedämm-Formkörper enthält, solange ein oder mehrere, unter den Druckdifferenz Δp ≥ 20 mbar beträgt,
wobei Δp = p2 - p1, mit p1 = Druck in der Kammer vor Einbringen des Organosilanes, p2 = Druck in der Kammer bei der das Einbringen des Organosilanes gestoppt wird, und
wobei der mikroporöse, hydrophile Kieselsäure aufweisende Wärmedämm-Formkörper perforiert ist.

Das erfindungsgemäße Verfahren wird so ausgeführt, dass bevorzugt 50 mbar ≤ Δp ≤ 5 bar, besonders bevorzugt 100 mbar ≤ Δp ≤ 500 mbar, ganz besonders bevorzugt 200 mbar ≤ Δp ≤ 400 mbar ist.

Unter einer hydrophilen Kieselsäure ist im Rahmen dieser Erfindung eine zu verstehen, die an ihrer Oberfläche keine organischen Gruppen, wie beispielsweise Alkylgruppen, trägt, die ihr einen hydrophoben, wasserabweisenden Charakter verleihen würden. Vielmehr sollen die sich an der Oberfläche befindlichen Gruppen weitestgehend oder vollständig aus Si-OH- und Si-O-Si-Gruppen bestehen. Beispielhaft sei die Herstellung pyrogener Kieselsäuren durch Flammenhydrolyse genannt, bei der eine dampfförmige Siliciumverbindung in einer Wasserstoff-/Sauerstoffflamme verbrannt wird. Diese pyrogene Kieselsäure ist hydrophil.

An die Kammer ist lediglich die Anforderung gestellt, dass sie die im erfindungsgemäßen Verfahren erforderlichen Drücke aufrecht erhalten kann.

In einer besonderen Ausführungsform der Erfindung wird das Verfahren so ausgeführt, dass Druck in der Kammer vor Einbringen des Organosilanes kleiner als Atmosphärendruck ist. Insbesondere ist es günstig, wenn 0,1 mbar ≤ p1 ≤ Atmosphärendruck mbar ist. Besonders bevorzugt ist eine Variante bei der 1 ≤ p1 ≤ 500 mbar ist. Bei dieser besonderen Ausführungsform erfolgt das Einbringen des Organosilanes also in eine evakuierte Kammer. Bei diesem Unterdruckverfahren wird das Organosilan selbst in die feinsten Poren des hydrophilen Formkörpers "gesaugt" und optimal verteilt.

In einer weiteren besonderen Ausführungsform der Erfindung wird das Verfahren so ausgeführt, dass Druck in der Kammer vor Einbringen des Organosilanes Atmosphärendruck oder mehr beträgt. In diesem Fall ist es günstig, wenn Atmosphärendruck ≤ p1 ≤ 10 bar ist. Bei diesem Überdruckverfahren wird das Organosilan in die Poren des hydrophilen Wärmedämm-Formkörpers "gedrückt" und dadurch optimal verteilt.

Bevorzugt kann bei dem erfindungsgemäßen Verfahren als mikroporöse, hydrophile Kieselsäure eine pyrogene Kieselsäure und/oder ein Siliciumdioxidaerogel eingesetzt werden.

Siliciumdioxid-Aerogelen werden durch spezielle Trocknungsverfahren von wässrigen Siliciumdioxidgelen hergestellt. Sie weisen ebenso eine sehr hohe Porenstruktur auf und sind daher hoch wirksame Dämmstoffe.

Pyrogene Kieselsäuren werden durch Flammenhydrolyse von flüchtigen Siliciumverbindungen wie organischen und anorganischen Chlorsilanen hergestellt. Bei diesem Verfahren wird ein verdampftes oder gasförmiges, hydrolysierbares Siliciumhalogenid mit einer Flamme zur Reaktion gebracht, die durch Verbrennung von Wasserstoff und eines sauerstoffhaltigen Gases gebildet worden ist. Die Verbrennungsflamme stellt dabei Wasser für die Hydrolyse des Siliciumhalogenides und genügend Wärme zur Hydrolysereaktion zur Verfügung. Eine so hergestellte Kieselsäure wird als pyrogene Kieselsäure bezeichnet. Bei diesem Prozess werden zunächst Primärpartikel gebildet, die nahezu frei von inneren Poren sind. Diese Primärteilchen verschmelzen während des Prozesses über sogenannte "Sinterhälse" zu Aggregaten. Aufgrund dieser Struktur ist pyrogen hergestellte Kieselsäure ein idealer Wärmedämmstoff, da die Aggregatstruktur eine hinreichende mechanische Stabilität bewirkt, die Wärmeübertragung durch Festkörperleitfähigkeit über die "Sinterhälse" minimiert und eine ausreichend hohe Porosität erzeugt.

Die eingesetzten Organosilane reagieren mit den Silanolgruppen der hydrophilen Kieselsäure und gestalten dadurch den Wärmedämm-Formkörper wasserabstoßend.

Für das erfindungsgemäße Verfahren können bevorzugt ein oder mehrere Organosilane aus der Gruppe bestehend aus Rₙ-Si-X₄₋ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, mit n = 1-8; R = -H, -CH₃, -C₂H₅; X = -Cl, -Br; -OCH₃, -OC₂H₅, -OC₃H₈, Y= NH, O ausgewählt werden.

Explizit seien (CH₃)₃SiCl, (CH₃)₂SiCl₂, CH₃SiCl₃, (CH₃)₃SiOC₂H₅, (CH₃)₂Si(OC₂H₅)₂, CH₃Si(OC₂H₅)₃, (CH₃)₃SiNHSi(CH₃)₃, (CH₃)₃SiOSi(CH₃)₃, (CH₃)₈Si₄O₄ [Octamethyltetracyclosiloxan], (CH₃)₆Si₃O₃ [Hexamethyltricyclosiloxan] und (CH₃)₃Si(OSi(CH₃)₂)₄OH [niedrigmolekulares Polysiloxanol] genannt. Bevorzugt werden (CH₃)₃SiCl, (CH₃)₂SiCl₂, CH₃SiCl₃, (CH₃)₃SiNHSi(CH₃)₃ und (CH₃)₈Si₄O₄ eingesetzt.

Das erfindungsgemäße Verfahren ist unter anderem dadurch gekennzeichnet, dass das Organosilan unter den in der Kammer vorliegenden Reaktionsbedingungen dampfförmig ist. Das Organosilan selbst kann in flüssiger oder dampfförmiger Form in die Kammer eingebracht werden. In flüssiger Form eingebracht, etwa durch Eindüsen, soll es in der Kammer in den dampfförmigen Zustand übergehen. Bevorzugt wird ein dampfförmiges Organosilan eingebracht.

Das Verfahren kann auch durchgeführt werden, indem man polare Substanzen während oder nach dem Einbringen des Organosilanes in die Kammer einbringt. Bevorzugt können dies Wasser, Alkohole und Wasserstoffhalogenide sein.

Der in dem erfindungsgemäßen Verfahren eingesetzte mikroporöse, hydrophile Kieselsäure enthaltende Wärmedämm-Formkörper kann weiterhin Trübungsmittel, Fasern und/oder feinteilige anorganische Zusatzstoffe enthalten.

Als Trübungsmittel kommen Titanoxide, Zirkonoxide, Ilmenit, Eisentitanat, Eisenoxide, Zirkonsilikat, Siliciumcarbid, Manganoxid und Ruß in Frage. Vorzugsweise weisen diese Trübungsmittel im Infrarot-Spektralbereich ein Maximum zwischen 1,5 und 10 µm auf. Die Partikelgröße dieser Teilchen liegt vorzugsweise zwischen 0,5 - 15 µm. Ihr Anteil an der Gesamtmischung beträgt bevorzugt 5 bis 20 Gew.-%.

Zur Armierung, also zur mechanischen Verstärkung, werden Fasern mit eingesetzt. Diese Fasern können anorganischen oder organischen Ursprungs sein und betragen bis zu 12 Gew.-% der Mischung. Beispiele einsetzbarer anorganischer Fasern sind Glaswolle, Steinwolle, Basalt-Fasern, Schlacken-Wolle und keramische Fasern, die aus Schmelzen von Aluminium und/oder Siliciumdioxid, sowie weiteren anorganischen Metalloxiden bestehen. Reine Siliciumdioxidfasern sind beispielsweise Silica-Fasern. Beispiele einsetzbarer organischer Fasern sind Cellulosefasern, Textilfasern oder Kunststofffasern. Der Durchmesser der Fasern beträgt bevorzugt 1-12 µm, besonders bevorzugt 6-9 µm und die Länge bevorzugt 1 - 25 mm, besonders bevorzugt 3-10 mm.

Weiterhin können bei dem erfindungsgemäßen Verfahren anorganische Füllmaterialien zugesetzt werden. Zum Einsatz kommen können verschiedene, synthetisch hergestellte Modifikationen von Siliciumdioxid, wie gefällte Kieselsäuren, Lichtbogenkieselsäuren, SiO₂-haltige Flugstäube, die durch Oxidationen von flüchtigem Siliciummonoxid, die bei der elektrochemischen Herstellung von Silicium oder Ferrosilicium entstehen. Ebenso Kieselsäuren, die durch Auslaugen von Silikaten wie Calciumsilicat, Magnesiumsilicat und Mischsilicaten wie Olivin mit Säuren hergestellt werden. Ferner können natürlich vorkommende SiO₂-haltige Verbindungen wie Diatomenerden und Kieselguren zum Einsatz kommen. Ebenfalls können thermisch aufgeblähte Mineralien wie Perlite und Vermiculite, feinteilige Metalloxide wie Aluminiumoxid, Titandioxid, Eisenoxid zugesetzt werden.

Eine besondere Ausführungsform der Erfindung sieht vor, dass der mikroporöse, hydrophile Kieselsäure enthaltende Wärmedämm-Formkörper 45 - 95 Gew.-%, vorzugsweise 55 - 90 Gew.-%, pyrogenes Siliciumdioxid und/oder Siliciumdioxidaerogel, 5 - 20 Gew.-%, vorzugsweise 7 - 15 Gew.-%, Trübungsmittel, 5-35 Gew.-%, vorzugsweise 10-30 Gew.-% feinteilige anorganische Zusatzstoffe und 0 - 12 Gew.-%, vorzugsweise 1-5 Gew.-%, Fasern enthält.

Um das Verfahren zu beschleunigen kann der zu behandelnde Wärmedämm-Formkörper zusätzlich perforiert werden. Durch die Perforationskanäle können die jeweils eingesetzten Organosilane schneller und gezielt in den Wärmedämm-Formkörper verbracht werden. Eventuell zu entfernende Überschüsse oder Reaktionsprodukte können durch die Perforationskanäle ebenfalls beschleunigt wieder abgeführt werden. Die Perforation kann durch Nadelung des zu behandelnden Wärmedämm-Formkörpers, vorzugsweise bereits während des Pressens des Wärmedämm-Formkörpers durch Nadelgreifer erfolgen. Vornehmlich bei Dämmstoffplatten kann die Perforierung einseitig, vorzugsweise aber beidseitig vorgenommen werden. Die Lochtiefe ist abhängig von der Stärke des hydrophilen Wärmedämm-Formkörpers und kann zwischen 5mm bis zum völligen Durchstoßen, vorzugsweise bei ca. 2/3 der Dicke des hydrophilen Wärmedämm-Formkörpers betragen. Um Wärmebrücken zu vermeiden sollte vorzugsweise eine beidseitige Perforierung mit versetztem Lochbild vorgenommen werden, wobei der hydrophile Wärmedämm-Formkörper nicht durchstoßen wird. Der Durchmesser eines Perforierungskanals sollte zwischen 0,1 mm und 3,0 mm, vorzugsweise zwischen 0,5 mm und 1,0 mm liegen. Der Abstand der Perforationskanäle voneinander kann zwischen 5mm und 200mm liegen, vorzugsweise sollte er bei einseitiger Perforierung der Abstand der Kanäle voneinander so groß sein wie die Nadeltiefe, bei beidseitiger Perforierung wie die doppelte Nadeltiefe.

Es kann vorteilhaft sein, wenn die Temperatur in der Kammer 20°C bis 300°C ist. Hierdurch kann die Behandlungszeit gesteuert werden. Abhängig von der Art des eingesetzten Organosilanes kann es besonders vorteilhaft sein eine Temperatur von 50 bis 200°C zu wählen.

Ebenso kann es vorteilhaft sein, wenn man den mikroporösen, hydrophile Kieselsäure enthaltenden Wärmedämm-Formkörper vom Zeitpunkt an, an dem das Organosilan zugegeben wird 1 Minute bis 1 Stunde, besonders bevorzugt 2 bis 20 Minuten, in der Kammer belässt.

Nach Beendigung der Behandlung können die eventuell überschüssigen Organosilane und Reaktionsprodukte aus dem nun hydrophoben Formkörper durch Aufheizen entfernt werden. Zur mechanischen Stabilisierung und zum besseren, auch staubfreien Handhabung kann der hydrophobe Formkörper mit Vliesen und Folien, vorzugsweise Schrumpffolien, umhüllt werden.

Der nach dem erfindungsgemäßen Verfahren hergestellten hydrophobierten Wärmedämm-Formkörpers kann zur Herstellung von Dämmungen in Bauhohlsteinen, Kerndämmungen bei mehrschaligen Bausteinen, Kerndämmungen für Wärmedämmstoff-Verbundsysteme für die Innen- und Außendämmung von Gebäuden, Dämmungen bei zweischaligen Mauerwerken, Dämmungen im Ofenbau und Vakuum-Isolations-Paneelen verwendet werden.

Einsatzgebiete für diese, nach dem erfindungsgemäßen Verfahren hergestellten hydrophoben Wärmedämm-Formkörper sind unter anderem alle Anwendungen bei denen die Dämmmaterialien Feuchtigkeit oder Nässe ausgesetzt sind.

### Beispiele

Beispiel 1: In einem auf ca. 100°C geheizten Exsikkator befindet sich ein mikroporöses Wärmedämmstoffpaneel mit einer Größe 250 x 250 x 20 mm einem Gewicht von 184,4 g, entsprechend einer Rohdichte von 147,5 kg/m³, und einer Zusammensetzung von 87,0 Gew.-% pyrogener Kieselsäure mit einer BET-Oberfläche von 300m²/g, 9,0 Gew.-% Flammruß und 4,0 Gew.-% Viskose-Kurzschnittfasern (ø9µm; L 6mm). Der Druck im Exsikkator wird mit Hilfe einer Wasserstrahlpumpe auf 15 mbar reduziert. Anschließend wird soviel dampfförmiges Hexamethyldisilazan in den Exsikkator gegeben, bis der Druck auf 300 mbar steigt.

Beispiel 2: In einem auf ca. 100°C geheizten Exsikkator befindet sich ein mikroporöses Wärmedämmstoffpaneel mit einer Größe 250 x 250 x 20 mm einem Gewicht von 189,3 g, entsprechend einer Rohdichte von 151,4 kg/m³, und einer Zusammensetzung von 87,0 Gew.-% pyrogener Kieselsäure mit einer BET-Oberfläche von 300m²/g, 9,0 Gew.-% Flammruß und 4,0 Gew.-% Viskose-Kurzschnittfasern (ø9µm; L 6mm). Der Druck im Exsikkator wird mit Hilfe einer Wasserstrahlpumpe auf 15 mbar reduziert. Anschließend wird soviel dampfförmiges Dimethyldichlorsilan in den Exsikkator gegeben, bis der Druck auf 300 mbar steigt.

Die gemäß der Beispiele 1 und 2 erhaltenen Platten sind vollständig wasserabweisend, besitzen eine gute mechanische Stabilität und eine unverändert geringe Wärmeleitfähigkeit.

## Patentansprüche

1. Verfahren zur Hydrophobierung eines mikroporösen, hydrophile Kieselsäure aufweisenden Wärmedämm-Formkörpers, bei dem dieser mit wenigstens einem Organosilan behandelt wird,
bei dem man in eine Kammer, die den mikroporösen, hydrophile Kieselsäure aufweisenden Wärmedämm-Formkörper enthält, solange ein oder mehrere, unter den Reaktionsbedingungen dampfförmige Organosilane einbringt, bis die Druckdifferenz
Δp ≥ 20 mbar beträgt, wobei
Δp = p2 - p1, mit p1 = Druck in der Kammer vor Eindringen des Organosilanes, p2 = Druck in der Kammer bei der das Einbringen des Organosilanes gestoppt wird,
**dadurch gekennzeichnet, dass**
der mikroporöse, hydrophile Kieselsäure aufweisende Wärmedämm-Formkörper perforiert ist.

2. Verfahren nach Anspruch 1, **dadurch gekennzeichnet, dass** der Druck in der Kammer vor dem Einbringen des Organosilanes kleiner als Atmosphärendruck ist.

3. Verfahren nach Anspruch 1, **dadurch gekennzeichnet, dass** der Druck in der Kammer vor dem Einbringen des Organosilanes Atmosphärendruck oder mehr beträgt.

4. Verfahren nach den Ansprüchen 1 bis 3, **dadurch gekennzeichnet, dass** als hydrophile Kieselsäure eine pyrogene Kieselsäure und/oder ein Siliciumdioxidaerogel eingesetzt wird.

5. Verfahren nach den Ansprüchen 1 bis 4, **dadurch gekennzeichnet, dass** das Organosilan aus der Gruppe bestehend aus Rₙ-Si-X₄₋ₙ, R₃Si-Y-SiR₃, RnSinOn, (CH₃)₃-Si-(O-Si(CH₃)₂)ₙ-OH, HO-Si(CH₃)₂-(O-Si(CH₃)₂)ₙ-OH, mit n = 1-8; R = -H, -CH₃, -C₂H₅; X= -Cl, -Br; -OCH₃, -OC₂H₅, -OC₃H₈, Y= NH, O ausgewählt ist.

6. Verfahren nach den Ansprüchen 1 bis 5, **dadurch gekennzeichnet, dass** das Organosilan in flüssiger oder dampfförmiger Form in die Kammer eingebracht wird.

7. Verfahren nach den Ansprüchen 1 bis 6, **dadurch gekennzeichnet, dass** zeitlich zusammen oder im Anschluss an die Zugabe des Organosilanes Wasser, Alkohole und/oder Wasserstoffhalogenide zugeführt werden.

8. Verfahren nach den Ansprüchen 1 bis 7, **dadurch gekennzeichnet, dass** der eingesetzte mikroporöse, hydrophile Wärmedämm-Formkörper weiterhin Trübungsmittel, Fasern und/oder feinteilige anorganische Zusatzstoffe enthält.

9. Verfahren nach den Ansprüchen 1 bis 8, **dadurch gekennzeichnet, dass** der eingesetzte mikroporöse, hydrophile Kieselsäure enthaltende Wärmedämm-Formkörper, wärmedämmende Formkörper 45 - 95 Gew.-%, vorzugsweise 55 - 90 Gew.-%, pyrogenes Siliciumdioxid und/oder Siliciumdioxidaerogel, 5 - 20 Gew.-%, vorzugsweise 7 - 15 Gew.-%, Trübungsmittel, 5-35 Gew.-%, vorzugsweise 10-30 Gew.-% feinteilige anorganische Zusatzstoffe und 0 - 12 Gew.-%, vorzugsweise 1-5 Gew.-%, Fasern enthält.

10. Verfahren nach den Ansprüchen 1 bis 9, **dadurch gekennzeichnet, dass** die Temperatur in der Kammer 20 bis 300°C ist.

11. Verfahren nach den Ansprüchen 1 bis 10, **dadurch gekennzeichnet, dass** man den eingesetzten mikroporösen, hydrophile Kieselsäure enthaltende Wärmedämm-Formkörper vom Zeitpunkt an, an dem das Organosilan zugegeben wird noch 1 Minute bis 1 Stunde in der Kammer belässt.

## Claims

1. Process for hydrophobizing a microporous thermal insulation molding comprising hydrophilic silica, in which the molding is treated with at least one organosilane,
in which one or more organosilanes which are gaseous under the reaction conditions are introduced into a chamber containing the microporous thermal insulation molding comprising hydrophilic silica until the pressure difference Δp ≥ 20 mbar, wherein
Δp = p2 - p1, where p1 = pressure in the chamber before introduction of the organosilane, p2 = pressure in the chamber at which the introduction of the organosliane is stopped,
**characterized in that**
the microporous thermal insulation molding comprising hydrophilic silica is perforated.

2. Process according to Claim 1,
**characterized in that**
the pressure in the chamber before introduction of the organosilane is less than atmospheric pressure.

3. Process according to Claim 1,
**characterized in that**
the pressure in the chamber before introduction of the organosilane is atmospheric pressure or above.

4. Process according to any of Claims 1 to 3,
**characterized in that**
a pyrogenic silica and/or a silicon dioxide aerogel is used as hydrophilic silica.

5. Process according to any of Claims 1 to 4,
**characterized in that**
the organosilane is selected from the group consisting of Rₙ-Si-X₄₋ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, where n = 1-8; R = -H, -CH₃, -C₂H₅; X= -Cl, -Br;-OCH₃, -OC₂H₅, -OC₃H₈, Y= NH, O.

6. Process according to any of Claims 1 to 5,
**characterized in that**
the organosilane is introduced in liquid or vapor form into the chamber.

7. Process according to any of Claims 1 to 6,
**characterized in that**
water, alcohols and/or hydrogen halides are introduced simultaneously with or subsequent to the addition of the organosilane.

8. Process according to any of Claims 1 to 7,
**characterized in that**
the microporous, hydrophilic thermal insulation molding used further comprises opacifiers, fibers and/or finely divided inorganic additives.

9. Process according to any of Claims 1 to 8,
**characterized in that**
the thermally insulating molding microporous thermal insulation molding containing hydrophilic silica which is used contains 45-95% by weight, preferably 55-90% by weight, of pyrogenic silicon dioxide and/or silicon dioxide aerogel, 5-20% by weight, preferably 7-15% by weight, of opacifiers, 5-35% by weight, preferably 10-30% by weight, of finely divided inorganic additives and 0-12% by weight, preferably 1-5% by weight, of fibers

10. Process according to any of Claims 1 to 9,
**characterized in that**
the temperature in the chamber is from 20 to 300°C.

11. Process according to any of Claims 1 to 10,
**characterized in that**
the microporous thermal insulation molding containing hydrophilic silica which is used is left in the chamber for from 1 minute to 1 hour from the point in time at which the organosilane is added.

## Revendications

1. Procédé pour hydrophobiser un objet moulé calorifuge comportant une silice hydrophile microporeuse, dans lequel cet objet moulé est traité avec au moins un organosilane, dans lequel on introduit dans une chambre qui contient l'objet moulé calorifuge comportant une silice hydrophile microporeuse un ou plusieurs organosilanes sous forme vapeur dans les conditions de la réaction, jusqu'à ce que la différence de pression Δp soit ≥ 20 mbar, avec
Δp = p2 - p1, avec p1 = pression dans la chambre avant introduction de l'organosilane, p2 = pression dans la chambre pour laquelle on interrompt l'introduction de l'organosilane
**caractérisé en ce que** l'objet moulé calorifuge comportant une silice hydrophile microporeuse est perforé.

2. Procédé selon la revendication 1, **caractérisé en ce que** la pression dans la chambre avant introduction de l'organosilane est inférieure à la pression atmosphérique.

3. Procédé selon la revendication 1, **caractérisé en ce que** la pression dans la chambre avant introduction de l'organosilane est supérieure ou égale à la pression atmosphérique.

4. Procédé selon les revendications 1 à 3, **caractérisé en ce qu'**on utilise en tant que silice hydrophile une silice pyrogène et/ou un aérogel de dioxyde de silicium.

5. Procédé selon les revendications 1 à 4, **caractérisé en ce que** l'organosilane est choisi dans le groupe consistant en Rₙ-Si-X₄₋ₙ, R₃Si-Y-SiR₃, RₙSiₙOₙ, (CH₃)₃-Si- (O-Si(CH₃)₂-OH, HO-Si(CH₃)₂-(O-Si(CH₃)₂)ₙ-OH, avec n = 1-8 ; R = -H, -CH₃, -C₂H₅ ; X est -Cl, -Br ; -OCH₃, -OC₂H₅, -OC₃H₈, Y = NH, O.

6. Procédé selon les revendications 1 à 5, **caractérisé en ce que** l'organosilane est introduit dans la chambre sous forme liquide ou sous forme vapeur.

7. Procédé selon les revendications 1 à 6, **caractérisé en ce qu'**on amène de l'eau, des alcools et/ou des halogénures d'hydrogène en même temps que l'addition de l'organosilane, ou après cette addition.

8. Procédé selon les revendications 1 à 7, **caractérisé en ce que** l'objet moulé calorifuge hydrophile microporeux utilisé contient en outre des agents de turbidité, des fibres et/ou des additifs inorganiques finement divisés.

9. Procédé selon les revendications 1 à 8, **caractérisé en ce que** l'objet moulé calorifuge, l'objet moulé calorifuge utilisé, contenant une silice hydrophile microporeuse contient 45-95 % en poids, de préférence 55-90 % en poids de dioxyde de silicium pyrogène et/ou d'aérogel de dioxyde de silicium, 5-20 % en poids, de préférence 7-15 % en poids d'agents de turbidité, 5-35 % en poids, de préférence 10-30 % en poids d'additifs inorganiques finement divisés, et 0-12 % en poids, de préférence 1-5 % en poids de fibres.

10. Procédé selon les revendications 1 à 9, **caractérisé en ce que** le température dans la chambre est de 20 à 300°C.

11. Procédé selon les revendications 1 à 10, **caractérisé en ce qu'**on abandonne dans la chambre l'objet moulé calorifuge utilisé, contenant une silice hydrophile microporeuse, pendant 1 minute à 1 heure à partir de l'instant où l'organosilane est ajouté.
